(19) Europäisches Patentamt
European Patent Office
Office européen des brevets

(11) **EP 2 031 018 B1**

(12) **EUROPEAN PATENT SPECIFICATION**

(45) Date of publication and mention
of the grant of the patent:
**26.10.2011 Bulletin 2011/43**

(21) Application number: **07744656.5**

(22) Date of filing: **04.06.2007**

(51) Int Cl.:
*C08L 53/00* (2006.01)   *B29C 45/27* (2006.01)

(86) International application number:
**PCT/JP2007/061296**

(87) International publication number:
**WO 2007/142193 (13.12.2007 Gazette 2007/50)**

(54) **POLYPROPYLENE RESIN COMPOSITION AND INJECTION MOLDED ITEMS FOR AUTOMOBILE THEREFROM**

POLYPROPYLENHARZZUSAMMENSETZUNG UND DARAUS HERGESTELLTE SPRITZGUSSAUTOMOBILTEILE

COMPOSITION DE RÉSINE DE POLYPROPYLÈNE ET ARTICLES MOULÉS PAR INJECTION POUR L'AUTOMOBILE FABRIQUÉS À PARTIR DE CELLE-CI

(84) Designated Contracting States:
**DE FR GB**

(30) Priority: **05.06.2006 JP 2006155688**

(43) Date of publication of application:
**04.03.2009 Bulletin 2009/10**

(73) Proprietors:
• **Sumitomo Chemical Company, Limited
Tokyo 104-8260 (JP)**
• **TOYOTA JIDOSHA KABUSHIKI KAISHA
Aichi-ken, 471-8571 (JP)**

(72) Inventors:
• **KANZAKI, Susumu
Kisarazu-shi, Chiba 292-0827 (JP)**
• **INANAMI, Hiroshi
Toyota-shi, Aichi 471-8571 (JP)**
• **INOUE, Kaoru
Toyota-shi, Aichi 471-8571 (JP)**

(74) Representative: **Vossius & Partner
Siebertstrasse 4
81675 München (DE)**

(56) References cited:
EP-A1- 1 647 575    DE-A1-102005 043 643
JP-A- 2004 292 723    JP-A- 2005 213 490
JP-A- 2006 111 864    JP-A- 2006 316 106

Remarks:
The file contains technical information submitted after the application was filed and not included in this specification

**Description**

The present invention relates to a polypropylene resin composition and to an injection molded article thereof for automobiles. It relates more specifically to a polypropylene resin composition that excels not only in fluidity but also in balance between rigidity and impact resistance and that can provide an automotive article excellent in weld appearance and flow mark appearance when being processed to form an automotive injection-molded article, to an automotive injection molded article formed thereof, and to a method for producing the automotive injection-molded article.

Polypropylene resin compositions have been used widely for molded articles, e.g., automotive interior or exterior components and electric component housings, because they are materials excellent in rigidity, impact resistance, and so on.

For example, JP-A-8-20686 discloses automotive soft resin bumpers made of propylene polymer compositions which contain a propylene polymer, an ethylene/α-olefin copolymer, talc and a specified propylene polymer containing a polar group or a combination of a specified conjugated diene copolymer having a hydroxyl group at a molecular terminal and a specified propylene polymer graft-modified with an ethylenically unsaturated compound containing a carboxyl or acid anhydride group, the bumpers having a specified flexural modulus and a specified linear expansion coefficient, for the purpose of improving the appearance (weld and flow mark) and the dimensional stability (low linear expansion) of automotive soft resin bumpers, their balance between impact resistance at low temperature and flexibility, and their paintability.

JP-A-9-71711 discloses a propylene resin composition comprising a propylene/ethylene block copolymer, an ethylene/α-olefin copolymer and talc, wherein the propylene/ethylene block copolymer contains a crystalline propylene homopolymer segment and an ethylene/propylene random copolymer segment containing ethylene at 20 to 80% by weight, and has a melt flow rate (MFR) of 25 to 140 g/10 minutes, and wherein the ethylene/α-olefin copolymer has an MFR of 0.5 to 15 g/10 minutes and an ethylene triad sequence fraction of 55 to 70%.

Patent Document 1: JP-A-8-20686

Patent Document 2: JP-A-9-71711

DE 10 2005 043 643 describes a polypropylene-based resin composition for injection molded articles having improved damage resistance and comprising a propylene-ethylene block copolymer A, random copolymer rubbers B-1 and B-2, both having different MFR and a filler.

Automotive exterior components, which have been required to have more improved quality, need still improvement even when the polypropylene resin compositions described above are used. A polypropylene resin composition is required to have still improved properties with respect to fluidity and balance between rigidity and impact resistance, and an injection-molded article thereof is required to be improved in weld appearance and flow mark appearance. In particular, an automotive bumper as a large-size injection-molded article is required to have good appearance and good balance between rigidity and impact resistance.

Under such situations, it is an object of the present invention to provide a polypropylene resin composition excellent in fluidity and in balance between rigidity and impact resistance, and capable of giving an automotive injection-molded article excellent in weld appearance and flow mark appearance when being molded into an automotive injection-molded article, and also to provide an automotive injection-molded article made thereof.

The inventors of the present invention have found, after having extensively studied, that the present invention can solve the above problems, accomplishing the present invention.

The present invention relates to a polypropylene resin composition containing 50 to 65% by weight of a polypropylene resin (A); 1 to 10% by weight of an ethylene/α-olefin copolymer rubber (B); 8 to 18% by weight of an ethylene/α-olefin copolymer rubber (C); and 18 to 25% by weight of an inorganic filler (D), wherein the combined content of the ethylene/α-olefin copolymer rubber (B) and the ethylene/α-olefin copolymer rubber (C) is 17 to 25% by weight, where the overall amount of the polypropylene resin composition is let be 100% by weight,

wherein the polypropylene resin (A) is a propylene/ethylene block copolymer (A-1) having a crystalline propylene homopolymer segment and a propylene/ethylene random copolymer segment having an intrinsic viscosity of 4.0 to 5.5 dL/g, or is a propylene polymer mixture (A-3) containing the block copolymer (A-1) and a crystalline propylene homopolymer (A-2),

the ethylene/α-olefin copolymer rubber (B) contains an α-olefin of 4 to 12 carbon atoms and ethylene, and has a density of 0.850 to 0.870 g/cm$^3$ and a melt flow rate of 0.05 to 1 g/10 minutes (determined at 230°C and under a load of 2.16 kg), and the ethylene/α-olefin copolymer rubber (C) contains an α-olefin of 4 to 12 carbon atoms and ethylene, and has a density of 0.850 to 0.870 g/cm$^3$ and a melt flow rate of 2.3 to 15 g/10 minutes (determined at 230°C and under a load of 2.16 kg), and also relates to an automotive injection-molded article of the polypropylene resin composition and to a method for producing the automotive injection-molded article.

In accordance with the present invention, a polypropylene resin composition can be obtained which is excellent in fluidity and in balance between rigidity and impact resistance and which can give an automotive injection-molded article excellent in weld appearance and flow mark appearance when being molded into an injection-molded article, and an automotive injection-molded article made thereof can also be obtained.

The polypropylene resin (A) for use in the present invention is a propylene/ethylene block copolymer (A-1) or a polymer mixture (A-3) containing the block copolymer (A-1) and a crystalline propylene homopolymer (A-2).

The propylene/ethylene block copolymer (A-1) is a propylene/ethylene block copolymer having a crystalline propylene homopolymer segment and a propylene/ethylene random copolymer segment.

From the viewpoint of improving the balance between rigidity and impact resistance, the propylene/ethylene block copolymer (A-1) preferably contains 55 to 90% by weight of the crystalline propylene homopolymer segment and 10 to 45% by weight of the propylene/ethylene random copolymer segment, where the whole amount of the block copolymer is let be 100% by weight.

The propylene/ethylene block copolymer (A-1) more preferably is a block copolymer containing 65 to 88% by weight of the crystalline propylene homopolymer segment and 12 to 35% by weight of the propylene/ethylene random copolymer segment, and still more preferably is a block copolymer containing 70 to 85% by weight of the crystalline propylene homopolymer segment and 15 to 30% by weight of the propylene/ethylene random copolymer segment.

From the viewpoint of improving rigidity, heat resistance or hardness, the crystalline propylene homopolymer segment in the block copolymer (A-1) preferably has an isotactic pentad fraction of 0.97 or more, and more preferably 0.98 or more, determined by $^{13}$C-NMR.

The isotactic pentad fraction is the fraction of the propylene monomer unit existing at the center of the isotactic chain in the form of a pentad unit (i.e., the chain in which five propylene monomer units are continuously meso-linked), determined by $^{13}$C-NMR, the procedure of which is described by A. Zambelli et al. (Macromolecules, 6, 925, 1973). NMR absorption peaks are assigned by the procedure described in Macromolecules, 8, 687, 1975, later published.

More specifically, the isotactic pentad fraction is determined as an areal fraction of mmmm peaks to all the absorption peaks in the methyl carbon region in the $^{13}$C-NMR spectral pattern. The isotactic pentad fraction of an NPL reference material (CRM No. M19-14 Polypropylene PP/MWD/2, supplied by UK's NATIONAL PHYSICAL LABORATORY) was determined by the above procedure to be 0.944.

From the viewpoint of improving the balance between the fluidity of a molten polypropylene resin composition of the present invention and the toughness of a molded article of the composition, the crystalline propylene homopolymer segment in the block copolymer (A-1) preferably has an intrinsic viscosity ($[\eta]_P$) of 0.7 to 1.3 dL/g, more preferably 0.85 to 1.1 dL/g.

Moreover, the molecular weight distribution (Q value, Mw/Mn), as determined by gel permeation chromatography (GPC), of the crystalline propylene homopolymer segment in the block copolymer (A-1) preferably is 3 or more but less than 7, and more preferably is 3 to 5.

From the viewpoint of realizing good balance between rigidity and impact resistance, the propylene/ethylene random copolymer segment in the propylene/ethylene block copolymer (A-1) preferably has a propylene/ethylene weight ratio of 65/35 to 52/48, and more preferably 62/38 to 55/45, wherein the ratio is defined as the ratio of the weight of propylene-derived structural units (propylene content) to the weight of ethylene-derived structural units (ethylene content).

From the viewpoint of making weld lines less noticeable to realize good weld appearance of an molded article, making flow marks less noticeable to realize good flow mark appearance of a molded article, and realizing good balance between rigidity and impact resistance, the intrinsic viscosity ($[\eta]_{EP}$) of the propylene/ethylene random copolymer segment in the block copolymer (A-1) is 4.0 to 5.5 dL/g, and preferably is 4.3 to 5.5 dL/g.

From the viewpoint of improving moldability and impact resistance, the block copolymer (A-1) preferably has a melt flow rate (MFR) of 10 to 120 g/10 minutes, more preferably 20 to 53 g/10 minutes.

The propylene/ethylene block copolymer (A-1) may be produced by a known polymerization method using a catalyst system prepared by bringing (a) a solid catalyst component containing magnesium, titanium, a halogen and electron donor as essential components, (b) an organoaluminum compound and (c) an electron donor component into contact with each other. Examples of this type of catalyst system and a production method thereof include those disclosed in JP-A-1-315908, JP-A-7-216017 and JP-A-10-212319.

The propylene/ethylene block copolymer (A-1) may be produced by a method which comprises at least two polymerization stages, wherein the crystalline propylene homopolymer segment is produced in the first stage and the propylene/ethylene random copolymer segment having an ethylene content of 35 to 48% by weight is produce in the second stage.

Examples of polymerization methods include a bulk polymerization process, a solution polymerization process, a slurry polymerization process and a vapor-phase polymerization process. These processes may be carried out either batch-wide or continuously. These polymerization processes may optionally be combined with each other. From the viewpoint of being industrially and economically advantageous, a continuous vapor-phase polymerization process and a continuous bulk-vapor-phase polymerization process are preferred.

More specific examples of a production method include:

(1) a method in which, in the presence of the aforesaid catalyst system prepared by bringing (a) a solid catalyst component, (b) an organoaluminum compound and (c) an electron donor component into contact with each other, at least two polymerization tanks are placed in series, a crystalline propylene homopolymer segment is produced in the first tank, the product is transferred to the second tank, and a propylene/ethylene random copolymer segment having an ethylene content of 35 to 48% by weight and an intrinsic viscosity of 4.0 to 5.5 dL/g is produced in the second tank, and

(2) a method in which, in the presence of the aforesaid catalyst system prepared by bringing (a) a solid catalyst component, (b) an organoaluminum compound and (c) an electron donor component into contact with each other, at least four polymerization tanks are placed in series, a crystalline propylene homopolymer segment is produced in the first and second tanks, the product is transferred to the third tank, and a propylene/ethylene random copolymer segment having an ethylene content of 35 to 48% by weight and intrinsic viscosity of 4.0 to 5.5 dL/g is produced in the third and fourth tanks.

A known method of handling catalysts may be adopted appropriately for determining the amounts of the (a) solid catalyst component, the (b) organoaluminum compound and the (c) electron donor component and how to supply the catalyst components into the polymerization tanks in the aforementioned polymerization methods.

The polymerization temperature is ordinarily in a range from -30 to 300°C, preferably from 20 to 180°C. The polymerization pressure is ordinarily in a range from the atmospheric pressure to 10 MPa, preferably from 0.2 to 5 MPa. Hydrogen, for example, may be used as an agent for adjusting the molecular weight.

In the production of the block copolymer (A-1), preliminary polymerization may be carried out by a known method before main polymerization. Examples of the known preliminary polymerization method is a method in which a small amount of propylene is supplied and which is conducted in a slurry state using a solvent in the in the presence of a solid catalyst component (a) and an organoaluminum compound (b).

The block copolymer (A-1) may, as required, be incorporated with various additives. Examples of such additives include antioxidant, UV absorber, lubricant, pigment, antistatic agent, copper inhibitor, flame retardant, neutralizer, foaming agent, plasticizer, nucleating agent, antifoaming agent and crosslinking agent. Among such additives, an antioxidant or a UV absorber is preferably added for improving heat resistance, weather resistance and stability against oxidation.

Examples of the method for producing the block copolymer (A-1) include, in addition to the above-described methods in which the block copolymer is produced by using the above-described catalyst and the above-described polymerization methods, a method in which the polymer produced by the above-described method using the above-described catalyst is melt-kneaded in the presence of a peroxide.

The intrinsic viscosity ($[\eta_{EP}]$) of the propylene/ethylene random copolymer segment in the polymer produced by the melt-kneading in the presence of a peroxide of a polymer obtained by the production method using the above-describe catalyst can be determined by measuring the intrinsic viscosity of a component of the polymer resulting from the melt-kneading which is soluble in xylene at 20°C.

An organic peroxide is ordinarily used as the aforesaid peroxide, and examples of such an organic peroxide include alkyl peroxides, diacyl peroxides, peroxyesters and peroxycarbonates.

The alkyl peroxides include dicumyl peroxide, di-tert-butyl peroxide, di-tert-butylcumyl peroxide, 2,5-dimethyl-2,5-di(tert-butylperoxy)hexane, 2,5-dimethyl-2,5-di(tert-butylperoxy)hexyne-3, tert-butylcumyl, 1,3-bis(t-butylperoxyisopropyl)benzene and 3,6,9-triethyl-3,6,9-trimethyl-1,4,7-triperoxonane.

The diacyl peroxides include benzoyl peroxide, lauroyl peroxide and decanoyl peroxide.

The peroxyesters include 1,1,3,3-tetramethylbutyl peroxyneodecanoate, $\alpha$-cumyl peroxyneodecanoate, tert-butyl peroxyneodecanoate, tert-butyl peroxyneoheptanonoate, tert-butyl peroxypivalate, tert-hexyl peroxypivalate, 1,1,3,3-tetramethylbutyl peroxy-2-ethylhexanoate, tert-amyl peroxyl-2-ethylhexanoate, tert-butyl peroxy-2-ethylhexanoate, tert-butyl peroxyisobutylate, di-tert-butyl peroxyhexahydroterephthalate, tert-amyl peroxy-3,5,5-trimethylhexanoate, tert-butyl peroxy-3,5,5-trimethylhexanoate, tert-butyl peroxyacetate, tert-butyl peroxybenzoate and di-butyl peroxytrimethyladipate.

The peroxycarbonates include di-3-methoxybutyl peroxydicarbonate, di(2-ethylhexyl) peroxydicarbonate, di-isopropyl peroxydicarbonate, tert-butyl peroxyisopropylcarbonate, di(4-tert-butylcyclohexyl) peroxydicarbonate, dicetyl peroxydicarbonate and dimyristyl peroxydicarbonate.

When the polypropylene resin (A) to be used in the present invention is a propylene polymer mixture (A-3) containing a propylene/ethylene block copolymer (A-1) and a crystalline propylene homopolymer (A-2), the content of the block copolymer (A-1) in the propylene polymer mixture (A-3) is preferably 30 to 99% by weight and the content of the propylene homopolymer (A-2) is preferably 1 to 70% by weight. More preferably, the content of the block copolymer (A-1) is 45 to 90% by weight and the content of the propylene homopolymer (A-2) is 55 to 10% by weight.

The propylene homopolymer (A-2) preferably has an isotactic pentad fraction of 97% or more, more preferably 98% or more.

The propylene homopolymer (A-2) ordinarily has a melt flow rate (MFR, determined at 230°C and under a load of 2160 g) of 10 to 500 g/10 minutes, preferably 40 to 350 g/10 minutes.

The propylene homopolymer (A-2) may be produced in a manner similar to that for producing the propylene/ethylene block copolymer (A-1). A method using the same catalyst system as that used for the production of the block copolymer (A-1) may be used.

The ethylene/$\alpha$-olefin copolymer rubber (B) for use in the present invention is an ethylene/$\alpha$-olefin copolymer rubber which contains an $\alpha$-olefin of 4 to 12 carbon atoms and ethylene. Examples of the $\alpha$-olefin of 4 to 12 carbon atoms include butene-1, pentene-1, hexene-1, heptene-1, octene-1 and decene. Butene-1, hexene-1 and octene-1 are preferable.

From the viewpoint of increasing impact strength, especially impact strength at low temperature, the content of $\alpha$-olefin in the copolymer rubber (B) preferably is 20 to 50% by weight, and more preferably is 24 to 50% by weight, wherein the whole amount of the ethylene/$\alpha$-olefin copolymer rubber (B) is let be 100% by weight.

Examples of the copolymer rubber (B) include ethylene/butene-1 random copolymer rubber, ethylene/hexene-1 random copolymer rubber and ethylene/octene-1 random copolymer rubber. Preferred is ethylene/octene-1 random copolymer rubber or ethylene/butene-1 random copolymer rubber. Two or more ethylene/$\alpha$-olefin copolymer rubbers may be used in combination.

From the viewpoint of obtaining good balance between rigidity and impact resistance, the copolymer rubber (B) has a density of 0.850 to 0.870 g/cm$^3$, preferably 0.850 to 0.865 g/cm$^3$.

From the viewpoint of making weld lines less noticeable to realize good weld appearance of an molded article, making flow marks less visible to realize good flow mark appearance of a molded article, and realizing good balance between rigidity and impact resistance, the copolymer rubber (B) has a melt flow rate (determined at 230°C and under a load of 2.16 kg) of 0.05 to 1 g/10 minutes, preferably 0.2 to 1 g/10 minutes.

The copolymer rubber (B) may be produced by copolymerizing an $\alpha$-olefin of 4 to 12 carbon atoms and ethylene using a known catalyst and a known polymerization method.

The known catalyst includes a catalyst system composed of a vanadium compound and an organoaluminum compound, a Ziegler-Natta catalyst system and a metallocene catalyst system, and the known polymerization process includes a solution polymerization process, a slurry polymerization process, a high-pressure ion polymerization process, or a vapor-phase polymerization process.

The ethylene/$\alpha$-olefin copolymer rubber (C) for use in the present invention is an ethylene/$\alpha$-olefin copolymer rubber which contains an $\alpha$-olefin of 4 to 12 carbon atoms and ethylene. Examples of the $\alpha$-olefin of 4 to 12 carbon atoms include butene-1, pentene-1, hexene-1, heptene-1, octene-1 and decene. Butene-1, hexene-1 and octene-1 are preferable.

From the viewpoint of increasing impact strength, especially impact strength at low temperature, the content of $\alpha$-olefin of 4 to 12 carbon atoms in the copolymer rubber (C) preferably is 20 to 50% by weight, more preferably 24 to 50% by weight, wherein the whole amount of the copolymer rubber (C) is let be 100% by weight.

Examples of the copolymer rubber (C) include ethylene/butene-1 random copolymer rubber, ethylene/hexene-1 random copolymer rubber and ethylene/octene-1 random copolymer rubber. Preferred is ethylene/octene-1 random copolymer rubber or ethylene/butene-1 random copolymer rubber. Two or more ethylene/$\alpha$-olefin copolymer rubbers may be used in combination.

From the viewpoint of obtaining good balance between rigidity and impact resistance, the copolymer rubber (C) has a density of 0.850 to 0.870 g/cm$^3$, preferably 0.850 to 0.865 g/cm$^3$.

From the viewpoint of obtaining good balance between rigidity and impact resistance, the copolymer rubber (C) has a melt flow rate (determined at 230°C and under a load of 2.16 kg) of 2.3 to 15 g/10 minutes, preferably 2.5 to 10 g/10 minutes.

The copolymer rubber (C) may be produced by the same method as that for producing the copolymer rubber (B).

The inorganic filler (D) for use in the present invention, which is a substance which is used generally for improving the rigidity of a polypropylene resin composition, include calcium carbonate, barium sulfate, mica, crystalline calcium silicate, talc and fibrous magnesium sulfate. Talc or fibrous magnesium sulfate is preferable, and talc is more preferable.

Two or more of inorganic fillers may be used in combination.

Talc to be used as the inorganic filler (D) preferably is a product obtained by crushing hydrous magnesium silicate. The crystalline structure of a hydrous magnesium silicate molecule is a three-layered pyrophylite type structure, and talc is composed of a pile of this structure. Talc is more preferably in the form of tabular particles obtained by finely pulverizing crystals of a hydrous magnesium silicate molecule to a size as small as a unit layer.

Talc preferably has an average particle diameter of 3 $\mu$m or less. The average particle diameter of talc is a 50% equivalent particle diameter $D_{50}$ determined on the basis of an integrated distribution curve measured by a minus sieve method while suspending talc in a dispersion medium, namely water or alcohol, using a centrifugal sedimentation type particle size distribution analyzer.

Talc may be used without being subjected to any treatment before use. Alternatively, it may be used after being surface-treated with a surfactant selected from various known surfactants for improving interfacial adhesion to or dispersibility in the polypropylene resin (A). The surfactants include silane coupling agents, titanium coupling agents, higher fatty acids, higher fatty acid esters, higher fatty acid amides and higher fatty acid salts.

Fibrous magnesium sulfate to be used as the inorganic filler (D) preferably has an average fiber length of 5 to 50 $\mu$m, more preferably 10 to 30 $\mu$m, and preferably has an average fiber diameter of 0.3 to 2 $\mu$m, more preferably 0.5 to 1 $\mu$m.

The content of the polypropylene resin (A) contained in the polypropylene resin composition of the present invention is 65 to 50% by weight, preferably is 63 to 55% by weight, and more preferably is 63 to 57% by weight, wherein the overall amount of the polypropylene resin composition is let be 100% by weight.

If the content of the polypropylene resin (A) is less than 50% by weight, the rigidity may deteriorate. If the content is more than 65% by weight, the impact strength may deteriorate.

The content of the ethylene/$\alpha$-olefin copolymer rubber (B) in the polypropylene resin composition of the present invention is 1 to 10% by weight, preferably 4 to 8% by weight.

If the content of the copolymer rubber (B) is less than 1% by weight, weld lines and flow marks may be visible and the impact strength may deteriorate. If the content is more than 10% by weight, the fluidity may deteriorate and the impact strength may deteriorate.

The content of the ethylene/$\alpha$-olefin copolymer rubber (C) in the polypropylene resin composition of the present invention is 8 to 18% by weight, preferably 10 to 16% by weight.

If the content of the copolymer rubber (C) is less than 8% by weight, the impact strength may deteriorate. If the content is more than 18% by weight, the rigidity may deteriorate.

The content of the inorganic filler (D) in the polypropylene resin composition of the present invention is 18 to 25% by weight, preferably 19 to 23% by weight.

If the content of the inorganic filler (D) is less than 18% by weight, the rigidity may deteriorate. If the content is 25% by weight, the impact strength may deteriorate.

The combined content of the ethylene/$\alpha$-olefin copolymer rubber (B) and the ethylene/$\alpha$-olefin copolymer rubber (C) in the polypropylene resin composition of the present invention is 17 to 25% by weight, preferably 18 to 22% by weight.

If the combined content of the copolymer rubber (B) and the copolymer rubber (C) is less than 17% by weight, the impact resistance may be insufficient. If the combined content is more than 25% by weight, the rigidity may be insufficient.

From the viewpoint of making weld lines less visible to realize good weld appearance of an molded article, making flow marks less visible to realize good flow mark appearance of a molded article, and realizing good balance between rigidity and impact resistance, the ratio of the content of the copolymer rubber (B) ($B_w$, % by weight) to that of the copolymer rubber (C) ($C_w$, % by weight), $B_w/C_w$, is preferably in a range from 15/85 to 85/15 (% by weight/% by weight), more preferably from 20/80 to 45/55 (% by weight/% by weight).

From the viewpoint of making weld lines less visible to realize good weld appearance of an molded article and making flow marks less visible to realize good flow mark appearance of a molded article, the polypropylene resin composition of the present invention preferably has a die swell (determined under conditions of 220˚C, L/D of 40 and shear rate of 2432 sec$^{-1}$) of 1.25 to 1.40, more preferably 1.25 to 1.35.

The polypropylene resin composition of the present invention may be produced by a method comprising melt-kneading of ingredients. Examples of the method include a method using a kneader such as a single screw extruder, a twin screw extruder, a Bunbury mixer and a hot roll. The kneading temperature is ordinarily 170 to 250˚C, and the kneading time is ordinarily 1 to 20 minutes. The ingredients may be kneaded either at one time or at separate times.

Examples of the method of kneading the ingredient at separate times include the following methods (1), (2) and (3):

(1) A method in which a block copolymer (A-1) is kneaded beforehand to form pellets, and then the pellets, a copolymer rubber (B), a copolymer rubber (C) and an inorganic filler (D) are kneaded together.

(2) A method in which a block copolymer (A-1) is kneaded beforehand to form pellets, and then the pellets, a homopolymer (A-2), a copolymer rubber (B), a copolymer rubber (C) and an inorganic filler (D) are kneaded together.

(3) A method in which a block copolymer (A-1), a copolymer rubber (B) and a copolymer rubber (C) are kneaded together, and then an inorganic filler (D) is added, followed by further kneading.

(4) A method in which a block copolymer (A-1) and an inorganic filler (D) are kneaded together, and then a copolymer rubber (B) and a copolymer rubber (C) are added, followed by further kneading.

In the methods (3) and (4), a crystalline homopolymer (A-2) may be added optionally.

The polypropylene resin composition of the present invention may, as required, be incorporated with various additives. Examples of such additives include antioxidant, UV absorber, lubricant, pigment, antistatic agent, copper inhibitor, flame retardant, neutralizer, foaming agent, plasticizer, nucleating agent, antifoaming agent and crosslinking agent. For improving heat resistance, weather resistance and stability against oxidation, it is preferable to add an antioxidant or a UV absorber.

For further improving balance between mechanical properties, the polypropylene resin composition of the present invention may be further incorporated with a rubber containing a vinyl aromatic compound.
Examples of the rubber containing a vinyl aromatic compound include a block copolymer composed of a vinyl aromatic compound polymer block and a conjugated diene polymer block. The hydrogenation ratio of the double bonds in the conjugated diene portions in the block copolymer is preferably 80% or more, more preferably 85% or more, wherein the total amount of the double bonds in the conjugated diene portions is let be 100% by weight.

The rubber containing a vinyl aromatic compound preferably has a molecular weight distribution (Q value), as determined by GPC (gel permeation chromatography), of 2.5 or less, more preferably of 1 to 2.3.

The content of the vinyl aromatic compound in the rubber is 10 to 20% by weight, more preferably 12 to 19% by weight, wherein the whole amount of the rubber containing a vinyl aromatic compound is let be 100% by weight.

The rubber containing a vinyl aromatic compound preferably has a melt flow rate (MFR, determined in accordance with JIS-K-6758 at 230°C) of 0.01 to 15 g/10 minutes, more preferably 0.03 to 13 g/10 minutes.

Examples of the rubber containing a vinyl aromatic compound include block copolymers, e.g., styrene/ethylene/butene/styrene rubber (SEBS), styrene/ethylene/propylene/styrene rubber (SEPS), styrene/butadiene rubber (SBR), styrene/butadiene/styrene rubber (SBS) and styrene/isoprene/styrene rubber (SIS), or block copolymers obtained by hydrogenation of such block copolymers. Other examples include rubbers obtained by causing a vinyl aromatic compound such as styrene to react with an ethylene/propylene/nonconjugated diene rubber (EPDM). Two or more rubbers containing a vinyl aromatic compound may be used in combination.

The rubber containing a vinyl aromatic compound may be produced by a method in which a vinyl aromatic compound is bonded to an olefin copolymer rubber or a conjugated diene rubber by polymerization or a reaction.

The polypropylene resin composition of the present invention can be used in the fields in which high quality is required, e.g., automotive interior or exterior components.
The automotive injection-molded article of the present invention is an automotive injection-molded article made of the polypropylene resin composition of the present invention, and preferably is a relatively large automotive injection-molded article as large as 2000 $m^2$ or more in projected area. Applications of such an article include door trims, pillars, instrument panels and bumpers.
The method for forming the injection-molded article for automobiles of the present invention preferably is a method in which the polypropylene resin composition of the present invention is molded to form an automotive injection-molded article by using an injection molding machine and a mold having a plurality of gates.

Examples

The present invention is described with reference to Examples and Comparative Examples. The procedures for analyzing the properties of the polymers and the compositions used in these examples are described below.

(1) Intrinsic viscosity (unit: dL/g)

The reduced viscosity was measured using an Ubbelohde viscometer at three concentrations of 0.1, 0.2 and 0.5 g/dL. The intrinsic viscosity was determined by the calculation procedure described in "Polymer Solutions and Polymer Experiments 11", P. 491 (published by Kyoritsu Shuppan in Japan in 1982), namely a method wherein the reduced viscosity is plotted against the concentration and the viscosity is extrapolated to the zero concentration. Tetralin was used as a solvent and the viscosity was measured at 135°C.

(1-1) Intrinsic viscosity of crystalline propylene/ethylene block copolymer

(1-1a) Intrinsic viscosity of crystalline propylene homopolymer segment: $[\eta]_P$

The intrinsic viscosity $[\eta]_P$ of the crystalline propylene homopolymer segment in a crystalline propylene/ethylene block copolymer was determined by the procedure (1) described above after taking a polymer powder out of a polymerization tank after completion of the first step, namely the polymerization to the crystalline propylene homopolymer segment, in the production of the crystalline propylene/ethylene block copolymer.

(1-1b) Intrinsic viscosity of propylene/ethylene random copolymer segment : $[\eta]_{EP}$

The intrinsic viscosity $[\eta]_{EP}$ of the propylene/ethylene random copolymer segment in a crystalline propylene/ethylene block copolymer was calculated from the following formula by using the weight ratio X of the propylene-ethylene random copolymer segment to the whole portion of the propylene-ethylene block copolymer after measuring the intrinsic viscosity $[\eta]_P$ of the propylene homopolymer segment and the intrinsic viscosity $[\eta]_T$ of the whole portion of the propylene/ethylene block copolymer by the procedure (1):

$$[\eta]_{EP} = [\eta]_T/X - (1/X - 1)[\eta]_P$$

where

$[\eta]_P$ is the intrinsic viscosity of the propylene homopolymer segment (dL/g), and
$[\eta]_T$ is the intrinsic viscosity of the propylene/ethylene block copolymer segment (dL/g), wherein the weight ratio X relative to the whole portion of the propylene-ethylene block copolymer was determined by the procedure (2) described below.

The intrinsic viscosity of a component soluble in xylene at 20°C collected by the procedure described below was measured and used as the intrinsic viscosity $[\eta]_{EP}$ of the propylene/ethylene random copolymer segment in a crystalline propylene/ethylene block copolymer thermally decomposed in the presence of a peroxide.

[Component soluble in xylene at 20°C]

Five grams of the crystalline propylene/ethylene block copolymer was dissolved completely in 500 mL of boiling xylene, and then cooled to a temperature of 20°C, at which the solution was left at rest for 4 hours. It was then filtered to separate the portion insoluble in xylene at 20°C. The filtrate was concentrated and solidified to evaporate xylene, and then dried at 60°C under reduced pressure, thereby obtaining a polymer component soluble in xylene at 20°C.

(2) The weight ratio X of the propylene/ethylene random copolymer segment to the whole portion of a propylene/ethylene block copolymer, and the ethylene content $[(C2')_{EP}]$ of the propylene/ethylene random copolymer segment in the propylene/ethylene block copolymer
The weight ratio and the ethylene content were determined from a $^{13}$C-NMR spectrum obtained under the following conditions, on the basis of the report made by Kakugo et al. (Macromolecules, 1982, 15, 1150-1152).
A sample was prepared by homogeneously dissolving about 200 mg of a propylene/ethylene block copolymer in 3 mL of ortho-dichlorobenzene in a test tube which was 10 mm in diameter. The $^{13}$C-NMR spectrum of the sample was measured under the following conditions.
Analysis temperature: 135°C
Pulse interval: 10 seconds
Pulse width: 45°
Number of integrations: 2500

(3) Melt flow rate (MFR, unit: g/10 minutes)

MFR was determined in accordance with JIS-K-6758 at a temperature of 230°C and a load of 2.16 kg.

(4) Flexural modulus (FM, unit: MPa)

FM was determined in accordance with JIS-K-7203, wherein the measurement was conducted at a loading rate of 2.0 mm/min and a measurement temperature of 23°C using an injection-molded specimen which was 6.4 mm in thickness and 100 mm in span length.

(5) Izod impact strength (Izod, unit: $kJ/m^2$)

Izod impact strength was determined in accordance with JIS-K-7110, wherein the measurement was conducted at a measurement temperature of 23°C or -30°C using a 6.4 mm thick injection-molded, notched specimen which was notched after molding.

(6) Isotactic pentad fraction ([mmmm])

The fraction of the propylene monomer unit existing at the center of the isotactic chain in the form of a pentad unit(i.e., the chain in which five propylene monomer units are continuously meso-linked) in a polypropylene molecular chain measured by the method described by A. Zambelli et al. in Macromolecules, 6, 925 (1973) was determined as an isotactic pentad fraction. NMR absorption peaks were assigned on the basis of Macromolecules, 8, 687 (1975), later published.

More specifically, the isotactic pentad fraction was determined as an areal fraction of the mmmm peak to all the absorption peaks in the methyl carbon region in the $^{13}$C-NMR spectrum. The isotactic pentad fraction of an NPL reference material (CRM No. M19-14 Propylene PP/MWD/2, supplied by UK's NATIONAL PHYSICAL LABORATORY was determined by the above procedure to be 0.944.

[Production-1 of injection-molded article]

Specimens for the property evaluations (4) to (6) described above were prepared by injection molding using an injection molding machine (IS150E-V, manufactured by Toshiba Machine Co., Ltd.) at a molding temperature of 220°C, a mold cooling temperature of 50°C, an injection time of 15 seconds and a cooling time of 30 seconds.

(7) Preparation of injection-molded article for evaluating development of weld lines and flow marks

(7-1) Small flat plate

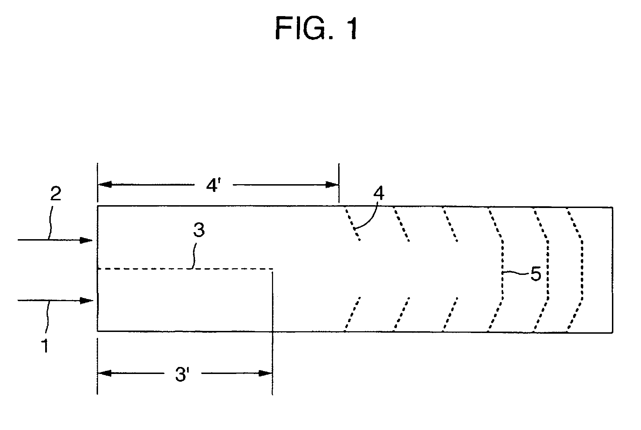

A small injection-molded article, which served as a specimen for evaluating the development of weld lines and flow marks, was prepared by the following procedure.
A flat molded article illustrated in Fig. 1 was prepared by executing molding with an injection molding machine SE180D having a clamping force of 180 tons, manufactured by Sumitomo Heavy Industries, Ltd. and a mold of 100 mm × 400 mm × 3.0 mm in size having twin parallel gates, at a molding temperature of 220°C. In Fig. 1, 1 and 2: gates, 3: weld line, 4: flow mark A developing near a side edge, 5: flow mark B developing at the central portion, 3': weld line length, and 4': position A at which a flow mark developed.

(7-1-a) Development of weld lines

Using a flat molded article prepared by the procedure (7-1), weld lines were visually observed. The length 3' and the visibility of the weld line illustrated in Fig. 1 were evaluated. In this evaluation, the shorter or the less visible the weld line is, the better in appearance the article is.

(7-1-b) Development of flow marks

Using a flat molded article prepared by the procedure (7-1), flow marks were visually observed. The distance 4' from the gated edge to the position where the flow marks shown in Fig. 1 started to develop, namely the distance to the position A where the flow marks started to develop (the distance, measured at a side edge and expressed in mm, to the position where the flow marks started to develop) and the visibility of the flow marks were evaluated. In this evaluation, the longer the distance to the position where the flow marks started to develop is or the less visible the flow marks are, the better in appearance the article is.

(7-2) Large flat molded article

A flat molded article to be used for evaluating development of weld lines and flow marks in a large flat molded article was prepared at a molding temperature of 220°C by using a mold having a size of 1650 mm × 280 mm × 3.0 mm with twin parallel gates.

(7-2-a) Development of weld lines

Using a flat molded article prepared by the procedure (7-2), a weld line was visually observed. The visibility of the weld line was observed in the same manner as that in (7-1-a) described above. In this evaluation, the less visible the weld line is, the better in appearance the article is.

(7-2-b) Development of flow marks

Using a flat molded article prepared by the procedure (7-2), flow marks were visually observed. In the same manner as that in the (7-1-b) described above, the distance 4' from the gated edge to the position where the flow marks started to develop, namely the distance to the position A where the flow marks started to develop (the distance, measured at a side edge and expressed in mm, to the position where the flow marks started to develop) and the visibility of the flow marks were evaluated. In this evaluation, the longer the distance to the position where the flow marks started to develop is or the less visible the flow marks are, the better in appearance the article is.

(a) Flow length of large flat molded article

Molded articles prepared at a specified common injection pressure by using a mold of 1650 mm × 280 mm × 3.0 mm-thick in size having a single gate were compared and evaluated with respect to their flow lengths (mm).
The method for synthesizing the solid catalyst component (I) used in the preparations of the polymers used in Examples and Comparative Examples is described below.

(1) Solid catalyst component (I)

A 200-L cylindrical reactor (equipped with a stirrer having three paired blades of 0.35 m in diameter and four baffles of 0.05 m in width) was purged with nitrogen. It was charged with 54 L of hexane, 100 g of diisobutyl phthalate, 20.6 kg of tetraethoxysilane and 2.23 kg of titanium tetrabutoxide, and then was stirred. Then, to the resulting mixture under stirring, 51 L of a solution of butylmagnesium chloride in dibutyl ether (2.1 mol/L in concentration) was dropped over four hours while the reactor temperature was kept at 7˚C. The stirring speed was set at 150 rpm. After the completion of the dropping, the mixture was stirred for one hour at 20˚C and then filtered. The resulting solid was washed with 70 L of toluene three times at room temperature, and then toluene was added to give a slurry of a solid catalyst component precursor. The solid catalyst component precursor contained Ti at 1.9% by weight, OEt (ethoxy group) at 35.6% by weight and OBu (butoxy group) at 3.5% by weight. It had an average particle diameter of 39 $\mu$m and contained a fine powdery component of 16 $\mu$m or less at an amount of 0.5% by weight. Then, toluene was removed so that the volume of the slurry would become 49.7 L, and the resulting slurry was stirred for one hour at 80˚C and then was cooled to 40˚C or lower. Under stirring, a mixed liquid composed of 30 L of titanium tetrachloride and 1.16 kg of dibutyl ether was charged, and further 4.23 kg of orthophthaloyl chloride was charged. The mixture was stirred for three hours while the reactor temperature was kept at 110˚C, and then filtered. The resulting solid was washed with 90 L of toluene three times at 95˚C, and then incorporated with toluene, giving a slurry. After being left at rest, toluene was removed so that the slurry would come to have a volume of 49.7 L, and then a mixed liquid composed of 15 L of titanium tetrachloride, 1.16 kg of dibutyl ether and 0.87 kg of diisobutyl phthalate was charged with stirring. The mixture was stirred for one hour while the reactor temperature was kept at 105˚C, and then filtered. The resulting solid was washed with 90 L of toluene twice at 95˚C, and then incorporated with toluene, giving a slurry. After being left at rest, toluene was removed so that the slurry would come to have a volume of 49.7 L. A mixed liquid composed of 15 L of titanium tetrachloride and 1.16 kg of dibutyl ether was charged with stirring. The mixture was stirred for one hour while the reactor temperature was kept at 105˚C, and then filtered. The mixture was stirred for one hour while the reactor temperature was kept at 105˚C, and then filtered. The resulting solid was washed with 90 L of toluene twice at 95˚C, and then incorporated with toluene, giving a slurry. After being left at rest, toluene was removed so that the slurry would come to have a volume of 49.7 L. A mixed liquid composed of 15 L of titanium tetrachloride and 1.16 kg of dibutyl ether was charged with stirring. At 95˚C, the resulting solid was washed with 90 L of toluene three times and with 90 L of hexane twice. The resulting solid component was dried to give a solid catalyst component. The solid catalyst component contained Ti at 2.1% by weight and a phthalic acid ester component at 10.8% by weight. This solid catalyst component is hereinafter referred to as solid catalyst component (I).

[Preparation of polymers]

(1) Preparation of propylene homopolymers (HPP)

(1-1) Preparation of HPP-1

A propylene homopolymer was prepared by continuous vapor-phase polymerization in the presence of solid catalyst component (I), where the hydrogen concentration and the polymerization temperature in the system were controlled. The resulting polymer had an intrinsic viscosity $[\eta]_P$ of 0.93 dL/g, an isotactic pentad fraction of 0.984, a molecular weight distribution, Q value (Mw/Mn), of 4.3, and an MFR of 120 g/10 minutes.

(1-2) Preparation of HPP-2

A propylene homopolymer was prepared by conventional solvent polymerization in the presence of a catalyst disclosed in JP-A-10-212319, where the hydrogen concentration and the polymerization temperature in the system were controlled. The resulting polymer had an intrinsic viscosity $[\eta]_P$ of 0.92 dL/g, an isotactic pentad fraction of 0.991, a molecular weight distribution, Q value (Mw/Mn), of 5.4, and an MFR of 111 g/10 minutes.

(1-3) Preparation of HPP-3

A propylene homopolymer was prepared by conventional solvent polymerization in the presence of a catalyst disclosed in JP-A-10-212319, where the hydrogen concentration and the polymerization temperature in the system were controlled. The resulting polymer had an intrinsic viscosity $[\eta]_P$ of 0.76 dL/g, an isotactic pentad fraction of 0.991, a molecular weight distribution, Q value (Mw/Mn), of 5.3, and an MFR of 307 g/10 minutes.

(2) Preparation of propylene/ethylene block copolymers (BCCP)

(2-1) Preparation of BCCP-1

By a continuous, two-stage vapor-phase polymerization process using solid catalyst component (I), a propylene homopolymer segment was prepared in the first stage, and a propylene/ethylene random copolymer segment was prepared in the second stage. In the first stage the hydrogen concentration and the polymerization temperature were controlled. In the second stage, vapor-phase polymerization for forming the propylene-ethylene random copolymer segment was continued while propylene was continuously supplied so that the reaction temperature and the reaction pressure could be kept at constant levels and hydrogen and ethylene were supplied so that the hydrogen and ethylene concentrations in the vapor phase could be kept at constant levels. The propylene homopolymer prepared in the first stage was sampled and analyzed to have an intrinsic viscosity $[\eta]_P$ of 0.93 dL/g and a stereoregularity (mmmm fraction) of 0.987. The finally-obtained propylene/ethylene block copolymer totally had an intrinsic viscosity $[\eta]_{TOTAL}$ of 1.64 dL/g. An analysis revealed that the content of the propylene/ethylene random copolymer (EP content) was 19.2% by weight. Therefore, the intrinsic viscosity $[\eta]_{EP}$ of the propylene/ethylene random copolymer segment (EP segment) formed in the third tank was determined to be 4.6 dL/g. The EP segment was analyzed to have an ethylene content of 42% by weight and an MFR of 30 g/10 minutes. The analytical results of the resulting polymer are given in Table 1.

(2-2) Preparation of BCCP-2

By a continuous, two-stage solvent polymerization process using a catalyst disclosed in JP-A-7-216017, a propylene homopolymer segment was prepared in the first stage, and a propylene/ethylene random copolymer segment was prepared in the second stage. A propylene/ethylene block copolymer having a structure shown below was obtained by controlling the hydrogen concentration, the polymerization temperature and the ethylene/propylene concentrations in the system. The propylene homopolymer prepared in the first stage was sampled and analyzed to have an intrinsic viscosity $[\eta]_P$ of 0.93 dL/g and a stereoregularity (mmmm fraction) of 0.974. The finally-obtained propylene/ethylene block copolymer totally had an intrinsic viscosity $[\eta]_{TOTAL}$ of 1.39 dL/g. An analysis revealed that the content of the propylene/ethylene random copolymer (EP content) was 10% by weight. Therefore, the intrinsic viscosity $[\eta]_{EP}$ of the propylene/ethylene random copolymer segment (EP segment) formed in the third tank was determined to be 5.5 dL/g. The EP segment was analyzed to have an ethylene content of 40% by weight and an MFR of 50 g/10 minutes. The analytical results of the resulting polymer are given in Table 1.

(2-3) Preparation of BCCP-3

The method for preparing BCPP-1 was repeated except for controlling and adjusting the hydrogen concentration, the polymerization temperature and the ethylene/propylene concentrations so that the polymer described in Table 1 could be obtained. The analytical results of the resulting polymer are given in Table 1.

(2-4) Preparation of BCCP-4

The method for producing BCPP-2 was repeated except for using a catalyst disclosed in JP-A-10-212319 and controlling and adjusting the hydrogen concentration, the polymerization temperature and the ethylene/propylene concentrations so that the polymer described in Table 1 could be obtained. The analytical results of the resulting polymer are given in Table 1.

Example 1

To 100 parts by weight of a propylene/ethylene block copolymer powder (BCCP-1) were added 0.05 parts by weight of calcium stearate (produced by NOF Corp.), 0.05 parts by weight of 3,9-bis[2-{3-(3-tert-butyl-4-hydroxy-5-methylphenyl)propionyloxy}-1,1-dimethylethyl]-2,4,8-10-tetraoxaspiro[5.5]undecane (Sumilizer GA80, produced by Sumitomo Chemical Co., Ltd.) and 0.05 parts by weight of bis(2,4-di-tert-butylphenyl)pentaerythritol diphosphite (ULTRANOX U626, GE Specialty Chemicals Inc.) as stabilizers, followed by forming pellets using an extruder.

Forty percent by weight of the BCPP-1 pellets, 12% by weight of a propylene homopolymer (HPP-2) powder, 8% by weight of a propylene homopolymer (HPP-3) powder, 7% by weight of an ethylene/butene-1 random copolymer rubber EBR-1 (density: 0.861 g/cm$^3$, MFR (determined at 230˚C and a load of 2.16 kg): 0.46 g/10 minutes) as the ethylene/$\alpha$-olefin copolymer rubber (B), 12% by weight of an ethylene-octene-1 random copolymer rubber EOR-1 (density: 0.857 g/cm$^3$, MFR (determined at 230˚C and a load of 2.16 kg): 2.7 g/10 minutes) as the ethylene/$\alpha$-olefin copolymer rubber (C) and 21% by weight of talc (average diameter: 2.7 $\mu$m) as the inorganic filler (D) were compounded at these relative amounts, and then preliminarily mixed uniformly by a tumbler. Subsequently, the resulting mixture was kneaded and extruded by a twin screw kneading/extruding machine (TEX44SS-30BW-2V, manufactured by the Japan Steel Works, Ltd.) under conditions including an extrusion rate of 50 kg/hour, 230˚C, and a screw rotation speed of 350 rpm to prepare a polypropylene resin composition.

In Table 2, there are shown the relative amounts of the individual components, the MFR of the polypropylene resin composition pelletized, and the properties and the result of weld appearance evaluation of an injection-molded article.

Example-2

Thirty two percent by weight of the BCPP-1 pellets, 11% by weight of BCPP-2 pellets resulting from pellitization in the same manner as that in the preparation of the BCPP-1 pellets, 3% by weight of a propylene homopolymer (HPP-2) powder, 14% by weight of a propylene homopolymer (HPP-3) powder, 6% by weight of an ethylene/butene-1 random copolymer rubber EBR-1 (density: 0.861 g/cm$^3$, MFR (determined at 230˚C and a load of 2.16 kg): 0.46 g/10 minutes) as the ethylene/$\alpha$-olefin copolymer rubber (B), 13% by weight of an ethylene-octene-1 random copolymer rubber EOR-1 (density: 0.857 g/cm$^3$, MFR (determined at 230˚C and a load of 2.16 kg): 2.7 g/10 minutes) as the ethylene/$\alpha$-olefin copolymer rubber (C) and 21% by weight of talc (average diameter: 2.7 $\mu$m) as the inorganic filler (C) were compounded at these relative amounts, and subjected to the same treatment as that in Example 1. Subsequently, the MFR and the properties of an injection-molded article were measured and the weld appearance of an injection-molded article was evaluated. In Table 2, the evaluation results are shown.

Comparative Example-1

Forty one percent by weight of BCPP-3 pellets resulting from pellitization in the same manner as that in the preparation of the BCPP-1 pellets, 11% by weight of BCPP-2 pellets, 18% by weight of a propylene homopolymer (HPP-1) powder, 15% by weight of an ethylene/butene-1 random copolymer rubber EBR-1 (density: 0.861 g/cm$^3$, MFR (determined at 230˚C and a load of 2.16 kg): 0.46 g/10 minutes) as the ethylene/$\alpha$-olefin copolymer rubber (B), 5% by weight of an ethylene-octene-1 random copolymer rubber EOR-1 (density: 0.857 g/cm$^3$, MFR (determined at 230˚C and a load of 2.16 kg): 2.7 g/10 minutes) as the ethylene/$\alpha$-olefin copolymer rubber (C) and 21% by weight of talc (average diameter: 2.7 $\mu$m) as the inorganic filler (C) were compounded at these relative amounts, and subjected to the same treatment as that in Example 1. Subsequently, the MFR and the properties of an injection-molded article were measured and the weld appearance of an injection-molded article was evaluated. In Table 2, the evaluation results are shown.

Comparative Example-2

Sixty one percent by weight of BCPP-4 pellets resulting from pellitization in the same manner as that in the preparation of the BCPP-1 pellets, 12% by weight of an ethylene/butene-1 random copolymer rubber EBR-2 (density: 0.862 g/cm$^3$, MFR (determined at 230˚C and a load of 2.16 kg): 2.5 g/10 minutes) as the ethylene/$\alpha$-olefin copolymer rubber (B), 11% by weight of an ethylene/octene-1 random copolymer rubber EOR-2 (density: 0.870 g/cm$^3$, MFR (determined at 230˚C and a load of 2.16 kg): 11 g/10 minutes) as the ethylene/$\alpha$-olefin copolymer rubber (C) and 16% by weight of talc (average diameter: 2.7 $\mu$m) as the inorganic filler (C) were compounded at these relative amounts, and subjected to the same treatment as that in Example 1. Subsequently, the MFR and the properties of an injection-molded article were measured and the weld appearance of an injection-molded article was evaluated. In Table 2, the evaluation results are shown.

[Table 1]

| | | Propylene/ethylene block copolymers | | | |
|---|---|---|---|---|---|
| | | BCPP-1 | BCPP-2 | BCPP-3 | BCPP-4 |
| $[\eta]_P$ | dl/g | 0.93 | 0.93 | 0.94 | 0.80 |
| $[\eta]_{EP}$ | dl/g | 4.6 | 5.5 | 3.1 | 6.7 |
| $(C'2)_{EP}$ | % by weight | 42 | 40 | 34 | 40 |
| EP content % | by weight | 19 | 10 | 18 | 10 |
| MFR | g/10 minutes | 30 | 50 | 34 | 88 |
| [mmmm] | | 0.987 | 0.974 | 0.983 | 0.991 |

[Table 2]

| | | Example-1 | Example-2 | Comparative Example-1 | Comparative Example 2 |
|---|---|---|---|---|---|
| BCPP-1 | % by weight | 40 | 32 | | |
| BCPP-2 | % by weight | | 11 | | |
| BCPP-3 | % by weight | | | 41 | |
| BCPP-4 | % by weight | | | | 61 |
| HPP-1 | % by weight | | | 18 | |
| HPP-2 | % by weight | 12 | 3 | | |
| HPP-3 | % by weight | 8 | 14 | | |
| EBR-1 | % by weight | 7 | 6 | 15 | |
| EBR-2 | % by weight | | | | 12 |
| EOR-1 | % by weight | 12 | 13 | 5 | |
| EOR-2 | % by weight | | | | 11 |
| Talc | % by weight | 21 | 21 | 21 | 16 |
| Die swell | - | 1.27 | 1.30 | 1.23 | 1.62 |
| Flow mark on large flat plate | | | | | |
| Position at which a flow mark develops | mm | 700 | 625 | 100 | |
| Evaluation[*1] | | ○ | ○ | × | |
| Weld line on large flat plate | | | | | |
| Evaluation[*2] | | ○ | ○ | ○ | |
| Flow length of large flat plate | mm | 1130 | 1200 | 1080 | |
| Flow mark on small flat plate | | | | | |
| Position at which a flow mark develops | mm | 125 | 155 | 105 | 330 |
| Evaluation[*1] | | ○ | ○ | Δ | ○ |
| Weld line on small flat plate | | | | | |
| Weld line length | mm | 115 | 115 | 115 | 400 |

(continued)

| | | Example-1 | Example-2 | Comparative Example-1 | Comparative Example 2 |
|---|---|---|---|---|---|
| Evaluation*2) | | ○ | ○ | ○ | × |
| MFR | g/10 minutes | 31 | 33 | 26 | 37 |
| Spiral flow length | mm | 911 | 925 | 902 | 1066 |
| FM | MPa | 2006 | 2012 | 1999 | 1755 |
| IZOD at 23°C | KJ/m$^2$ | 461 | 439 | 440 | 550 |
| IZOD at -30°C | KJ/m$^2$ | 61 | 56 | 51 | 51 |

*1) Visibility of flow mark
○: No flow marks were visible
Δ: Flow marks were slightly visible
×: Flow marks were visible
*2) Visibility of weld line
○: No weld line was visible
×: A weld line was visible

It is found that the polypropylene resin compositions prepared in Examples-1 and 2, which satisfy the requirements of the present invention, and injection-molded articles thereof are excellent in weld appearance and fluidity and have good balance between high rigidity and impact resistance, in particular excellent in fluidity and flow mark appearance in large article production.

It is also found that the polypropylene resin composition prepared in Comparative Example-1 is insufficient in flow mark appearance and fluidity because the intrinsic viscosity ($[\eta]_{EP}$) of the propylene/ethylene random copolymer segment in the block copolymer (A-1) fails to satisfy the requirement of the present invention with respect to it and the content of the ethylene/$\alpha$-olefin copolymer rubber (B) fails to satisfy the requirement of the present invention with respect to it.

It is also found that the polypropylene resin composition prepared in Comparative Example-2 is insufficient in weld appearance because the intrinsic viscosity ($[\eta]_{EP}$) of the propylene/ethylene random copolymer segment in the block copolymer (A-1) fails to satisfy the requirement of the present invention with respect to it and no ethylene/$\alpha$-olefin copolymer rubber (B) is contained, so that one of the requirements of the present invention is satisfied. It is further found that the rigidity is insufficient because the content of talc fails to satisfy the requirement of the present invention with respect to it.

Brief Description of the Drawing

Fig. 1 is a plan view of a flat molded article (small flat plate) for evaluating the appearance.

Description of Symbols

1: Gate 1
2: Gate 2
3: Weld line
4: Flow mark A
5: Flow mark B
3': Weld line length
4': Position A at which a flow mark develops

**Claims**

**1.**    A polypropylene resin composition comprising: 50 to 65% by weight of a polypropylene resin (A); 1 to 10% by weight of an ethylene/α-olefin copolymer rubber (B); 8 to 18% by weight of an ethylene/α-olefin copolymer rubber (C); and 18 to 25% by weight of an inorganic filler (D), wherein the combined content of the ethylene/α-olefin copolymer rubber (B) and the ethylene/α-olefin copolymer rubber (C) is 17 to 25% by weight, where the overall amount of the polypropylene resin composition is let be 100% by weight,

wherein the polypropylene resin (A) is a propylene/ethylene block copolymer (A-1) having a crystalline propylene homopolymer segment and a propylene/ethylene random copolymer segment having an intrinsic viscosity of 4.0 to 5.5 dL/g (measured at a temperature of 135°C in tetralin), or is a propylene polymer mixture (A-3) containing the block copolymer (A-1) and a crystalline propylene homopolymer (A-2),

the ethylene/α-olefin copolymer rubber (B) contains an α-olefin of 4 to 12 carbon atoms and ethylene, and has a density of 0.850 to 0.870 g/cm$^3$ and a melt flow rate of 0.05 to 1 g/10 minutes (determined at 230°C and under a load of 2.16 kg), and

the ethylene/α-olefin copolymer rubber (C) contains an α-olefin of 4 to 12 carbon atoms and ethylene, and has a density of 0.850 to 0.870 g/cm$^3$ and a melt flow rate of 2.3 to 15 g/10 minutes (determined at 230°C and under a load of 2.16 kg).

2. The polypropylene resin composition according to Claim 1, wherein the propylene/ethylene random copolymer segment in the propylene/ethylene block copolymer (A-1) has a propylene/ethylene weight ratio of 65/35 to 52/48, the ratio being defined as the ratio of the weight of propylene-derived structural units (propylene content) to the weight of ethylene-derived structural units (ethylene content).

3. The polypropylene resin composition according to Claim 1 or 2, wherein the crystalline propylene homopolymer segment in the propylene/ethylene block copolymer (A-1) or the component composed of the crystalline propylene homopolymer in the propylene polymer mixture (A-3) has an isotactic pentad fraction, as determined by $^{13}$C-NMR, of 0.98 or more.

4. The polypropylene resin composition according to any one of Claims 1 to 3, wherein the inorganic filler (D) is talc.

5. An automotive injection molded article made of the polypropylene resin composition according to any one of Claims 1 to 4.

6. A method for producing the automotive injection molded article according to Claim 5, comprising molding the polypropylene resin composition according to any one of Claims 1 to 4 to form an automotive injection molded article by the use of an injection molding machine and a mold having a plurality of gates.

**Patentansprüche**

1. Eine Polypropylenharzzusammensetzung umfassend:

50 bis 65 Gew.-% eines Polypropylenharzes (A); 1 bis 10 Gew.-% eines Ethylen/α-Olefin Copolymerkautschuks (B); 8 bis 18 Gew.-% eines Ethylen/α-Olefin Copolymerkautschuks (C); und 18 bis 25 Gew.-% eines anorganischen Füllstoffs (D), wobei der Gesamtgehalt des Ethylen/α-Olefin Copolymerkautschuks (B) und des Ethylen/α-Olefin Copolymerkautschuks (C) 17 bis 25 Gew.-% beträgt, wenn die Gesamtmenge der Polypropylenharzzusammensetzung 100 Gew.-% ist,

wobei

das Polypropylenharz (A) ein Propylen/Ethylen Blockcopolymer (A-1) mit einem kristallinen Propylen-Homopolymersegment und einem statistischen Propylen/Ethylen-Copolymersegment mit einer Grenzviskosität von 4,0 bis 5,5 dL/g (gemessen bei einer Temperatur von 135°C in Tetralin) ist, oder ein Propylenpolymergemisch (A-3), welches das Blockcopolymer (A-1) und ein kristallines Propylenhomopolymer (A-2) enthält, ist,

der Ethylen/α-Olefin Copolymerkautschuk (B) ein α-Olefin mit 4 bis 12 Kohlenstoffatomen und Ethylen enthält und eine Dichte von 0,850 bis 0,870 g/cm$^3$ und eine Schmelzflussrate von 0,05 bis 1 g/10 Minuten (gemessen bei 230°C unter einer Last von 2,16 kg) aufweist, und

der Ethylen/α-Olefin Copolymerkautschuk (C) ein α-Olefin mit 4 bis 12 Kohlenstoffatomen und Ethylen enthält und eine Dichte von 0,850 bis 0,870 g/cm$^3$ und eine Schmelzflussrate von 2,3 bis 15 g/10 Minuten (gemessen bei 230°C unter einer Last von 2,16 kg) aufweist.

2. Die Polypropylenharzzusammensetzung gemäß Anspruch 1, wobei der statistische Propylen/Ethylen-Copolymersegment in dem Propylen/Ethylen Blockcopolymer (A-1) ein Propylen/Ethylen Gewichtsverhältnis von 65/35 bis 52/48 aufweist, wobei das Verhältnis als das Verhältnis des Gewichts der von Propylen abgeleiteten Struktureinheiten (Propylengehalt) zu dem Gewicht der von Ethylen abgeleiteten Struktureinheiten (Ethylengehalt) definiert wird.

3. Die Polypropylenharzzusammensetzung gemäß Anspruch 1 oder 2, wobei das kristalline Propylen-Homopolymersegment in dem Propylen/Ethylen Blockcopolymer (A-1) oder der Komponente, die aus dem kristallinen Propylenhomopolymer in dem Propylenpolymergemisch (A-3) besteht, eine isotaktische Pentadfraktion von 0,98 oder mehr, durch $^{13}$C-NMR bestimmt, aufweist.

4. Die Polypropylenharzzusammensetzung gemäß einem der Ansprüche 1 bis 3, wobei der anorganische Füllstoff (D) Talk ist.

5. Ein Spritzgussautomobilteil, hergestellt aus der Polypropylenharzzusammensetzung gemäß einem der Ansprüche 1 bis 4.

6. Ein Verfahren zur Herstellung des Spritzgussautomobilteils gemäß Anspruch 5, umfassend das Formen der Polypropylenharzzusammensetzung gemäß einem der Ansprüche 1 bis 4, durch die Verwendung einer Spritzgießmaschine und einer Form, welche eine Vielzahl von Öffnungen aufweist, um ein Spritzgussautomobilteil zu formen.

## Revendications

1. Composition de résine de polypropylène comprenant : 50 à 65 % en poids d'une résine de polypropylène (A) ; 1 à 10 % en poids d'un caoutchouc de copolymère d'éthylène/α-oléfine (B) ; 8 à 18 % en poids d'un caoutchouc de copolymère d'éthylène/α-oléfine (C) ; et 18 à 25 % d'une charge inorganique (D), dans laquelle la teneur combinée du caoutchouc de copolymère d'éthylène/α-oléfine (B) et du caoutchouc de copolymère d'éthylène/α-oléfine (C) est de 17 à 25 % en poids, dans laquelle la quantité totale de la composition de résine de poly(propylène) est fixée à 100 % en poids,
dans laquelle la résine de polypropylène (A) est un copolymère séquencé de propylène/éthylène (A-1) présentant un segment d'homopolymère propylène cristallin et un segment de copolymère statistique de propylène/éthylène présentant une viscosité intrinsèque de 4,0 à 5,5 dL/g (mesurée à une température de 135 °C dans la tétraline), ou est un mélange de polymère de propylène (A-3) contenant le copolymère séquencé (A-1) et un homopolymère de propylène cristallin (A-2),
le caoutchouc de copolymère d'éthylène/α-oléfine (B) contient une α-oléfine de 4 à 12 atomes de carbone et de l'éthylène, et présente une masse volumique de 0,850 à 0,870 g/cm$^3$ et un indice de fluage de 0,05 à 1 g/10 minutes (déterminé à 230 °C et sous une charge de 2,16 kg), et
le caoutchouc de copolymère d'éthylène/α-oléfine (C) contient une α-oléfine de 4 à 12 atomes de carbone et de l'éthylène, et présente une masse volumique de 0,850 à 0,870 g/cm$^3$ et un indice de fluage de 2,3 à 15 g/10 minutes (déterminé à 230 °C et sous une charge de 2, 16 kg).

2. Composition de résine de polypropylène selon la revendication 1, dans laquelle le segment de copolymère statistique de propylène/éthylène dans le copolymère séquencé de propylène/éthylène (A-1) présente un rapport en poids propylène/éthylène de 65/35 à 52/48, le rapport étant défini comme le rapport entre le poids des motifs structurels dérivés du propylène (teneur en propylène) et le poids des motifs structurels dérivés d'éthylène (teneur en éthylène).

3. Composition de résine de polypropylène selon la revendication 1 ou 2, dans laquelle le segment d'homopolymère de propylène cristallin dans le copolymère séquencé de propylène/éthylène (A-1) ou le composant composé de l'homopolymère de propylène cristallin dans le mélange de polymère de propylène (A-3) présente une fraction pentad isotactique telle que déterminée par RMN $^{13}$C, de 0,98 ou plus.

4. Composition de résine de polypropylène selon l'une quelconque des revendications 1 à 3, dans laquelle la charge inorganique (D) est le talc.

5. Article moulé par injection pour automobile constitué de la composition de résine de polypropylène selon l'une quelconque des revendications 1 à 4.

6. Procédé de production de l'article moulé par injection pour automobile selon la revendication 5, comprenant le moulage de la composition de résine de polypropylène selon l'une quelconque des revendications 1 à 4 pour former un article moulé par injection pour automobile, à l'aide d'une machine de moulage par injection et d'un moule ayant une pluralité de portes.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8020686 A
- JP 9071711 A
- DE 102005043643
- JP 1315908 A
- JP 7216017 A
- JP 10212319 A

**Non-patent literature cited in the description**

- **A. Zambelli et al.** *Macromolecules,* 1973, vol. 6, 925
- *Macromolecules,* 1975, vol. 8, 687
- Polymer Solutions and Polymer Experiments 11. Kyoritsu Shuppan, 1982, 491
- **Kakugo et al.** *Macromolecules,* 1982, vol. 15, 1150-1152